# EUROPEAN PATENT APPLICATION

(11) **EP 4 675 398 A1**
(43) Date of publication of application: **07.01.2026**
(21) Application number: 25181845.6
(22) Date of filing: 10.06.2025
(51) Int. Cl.: G06F 1/3206, G06F 1/3231, G06F 1/3234, G06F 1/3287

(54) **INFORMATION PROCESSING APPARATUS AND CONTROL METHOD**

(30) Priority: 05.07.2024 JP 2024109110
(71) Applicant: Lenovo (Singapore) Pte. Ltd., New Tech Park 556741 (SG)
(72) Inventor: NISHIO, Masashi, Yokohama-shi, 220-0012 (JP); MO, Liheng, Yokohama-shi, 220-0012 (JP)
(74) Representative: Openshaw & Co.

(57) **Abstract**

The present invention is to prevent unnecessary bootup by person detection processing when the transition to a standby state is made with a trigger other than that of detecting the leave of a person. An information processing apparatus performs detection processing having a first detection mode to make a transition to a second detection mode when it is determined that a person becomes absent, the second detection mode to return to the first detection mode when the motion of an object is detected during a certain period of time, or to make a transition to a third detection mode when the motion of an object is not detected during the certain period of time, and the third detection mode to detect an object with low power consumption, wherein when an operating state of a system is controlled to a first operating state or a second operating state with power consumption lower than the first operating state based on a processing trigger other than the detection processing though it is determined in the detection processing that a person is present in the first detection mode, a detection time in the second detection mode is changed to 0, or the transition of the operating state of the system to the third detection mode is made without waiting for the certain period of time when it is determined that the person becomes absent in the first detection mode.

## Description

### BACKGROUND OF THE INVENTION

### Field of the Invention

The present invention relates to an information processing apparatus and a control method.

### Description of the Related Art

There is a device that automatically boots a system and causes the system to make a transition to a standby state by detecting the approach and leave of a person using a distance sensor (distance measuring sensor) that detects a distance using infrared rays or the like (for example, Japanese Unexamined Patent Application Publication No. 2020-102151). For example, when the leave of a person is detected by a device in a normal operating state, a screen is turned off (screen off) after a certain period of time has passed to make the transition to the standby state.

### SUMMARY OF THE INVENTION

As described above, since a waiting time from when the leave of a person is detected until the transition to the standby state is set up, it has the advantage of being able to detect a person before unnecessarily going into the standby state and to continue the normal operating state when the leave of the person is temporary or false positive. Generally, in the normal operating state, the motion of an object is detected using a distance sensor to improve the detection performance of a person in order to determine whether or not the object is a person, while in the standby state, only the presence or absence of an object is detected at low frame rates without detecting the motion of the object to detect a person because low power consumption is desirable in the standby state. In contrast, during the waiting time from when the leave of the person is detected in the normal operating state until the transition to the standby state, the detection performance of a person in the normal operating state is maintained to detect the motion of an object. Therefore, when the motion of an object is detected, since a person is determined to be present to continue the normal operating state, it is possible to prevent an unnecessary transition to the standby state.

However, the transition to the standby state may also be made with a trigger other than that of detecting the leave of a person. For example, there is a function to turn off the screen (screen off) and to make the transition to the standby state (a so-called sleep function) when a preset time has elapsed with no input by a user as a function of an OS (Operating System). Further, the transition to the standby state may also be made by the user performing an operation (an operation of a power button, a sleep command operation, or the like) to make the transition to the standby state. Thus, when the transition to the standby state is made with a trigger other than that of detecting the leave of a person, there may be a case where the presence of a person is detected in person detection processing. After that, when the leave of the person is detected, since the motion of an object is detected over a certain waiting period of time, bootup may be done even when a person other than the user cuts across during that period of time. This bootup is not recommended because the transition to the standby state is made with a trigger other than that of detecting the leave of a person.

The present invention has been made in view of the above circumstances, and it is an object thereof to provide an information processing apparatus and a control method to prevent unnecessary bootup by person detection processing when the transition to the standby state is made with a trigger other than that of detecting the leave of a person.

The present invention has been made to solve the above problem, and an information processing apparatus according to the first aspect of the present invention includes: a sensor for detecting an object present within a predetermined detection range; and a processor which controls the operating state of a system to a first operating state or a second operating state with power consumption lower than the first operating state, wherein the processor performs: detection processing having a first detection mode to detect an object present within the detection range using the sensor, to determine the presence or absence of a person within the detection range based on the detection result, and to make a transition to a second detection mode when it is determined that the person becomes absent within the detection range, the second detection mode to return to the first detection mode when the motion of an object is detected within the detection range during a certain period of time using the sensor, or to make a transition to a third detection mode when the motion of an object is not detected within the detection range during the certain period of time, and the third detection mode to detect an object present within the detection range with power consumption lower than the first detection mode and the second detection mode; first operation control processing to continue the first operating state when returning to the first detection mode during the certain period of time even after making the transition from the first detection mode to the second detection mode in the detection processing in a state where the operating state of the system is controlled to the first operating state, or to control the operating state of the system to the second operating state when making the transition to the third detection mode in the detection processing; and second operation control processing to control the operating state of the system to the first operating state or the second operating state based on a processing trigger other than the detection processing, and when the operating state of the system is controlled from the first operating state to the second operating state by the second operation control processing though it is determined in the detection processing that a person is present within the detection range in the first detection mode, the processor changes a detection time in the second detection mode from the certain period of time to 0, and makes the transition to the third detection mode without waiting for the certain period of time when determining that the person becomes absent within the detection range in the first detection mode.

The above information processing apparatus may be such that the processor makes the transition to the third detection mode without waiting for the certain period of time during the second detection mode in the detection processing when the operating state of the system is controlled from the first operating state to the second operating state by the second operation control processing.

The above information processing apparatus may also be such that the processor controls the operating state of the system from the first operating state to the second operating state by the second operation control processing when a preset period of time has elapsed with no input by a user or when there is input by the user to make the transition to second operating state.

The above information processing apparatus may further be such that, when the operating state of the system is controlled from the second operating state to the first operating state in such a state that the detection time in the second detection mode is changed to 0 in the detection processing, the processor returns the detection time to the certain period of time.

Further, the above information processing apparatus may be such that, when there is input by the user to make the transition to the first operating state, the processor controls the operating state of the system from the second operating state to the first operating state by the second operation control processing.

Further, the above information processing apparatus may be such that the processor makes the transition from the third detection mode to the first detection mode in the detection processing due to the fact that a person is determined to be present within the detection range in the third detection mode, and when making the transition from the third detection mode to the first detection mode by the detection processing, the processor controls the operating state of the system from the second operating state to the first operating state.

Further, the above information processing apparatus may be such that, in the detection processing, when the person is determined to be present within the detection range in the third detection mode, the processor makes the transition from the third detection mode to the first detection mode based on the orientation of a face of the person.

Further, the above information processing apparatus may be such that the second operating state is a state in which at least the screen of a display unit is turned off.

Further, a control method according to the second aspect of the present invention is a control method for an information processing apparatus including: a sensor for detecting an object present within a predetermined detection range; and a processor which controls an operating state of a system to a first operating state or a second operating state with power consumption lower than the first operating state, the control method causing the processor to perform: a detection step having a first detection mode to detect an object present within the detection range using the sensor, to determine the presence or absence of a person within the detection range based on the detection result, and to make a transition to a second detection mode when determining that the person becomes absent within the detection range, the second detection mode to return to the first detection mode when the motion of an object is detected within the detection range during a certain period of time using the sensor, or make a transition to a third detection mode when the motion of an object is not detected within the detection range during the certain period of time, and the third detection mode to detect an object present within the detection range with power consumption lower than the first detection mode and the second detection mode; a first operation control step to continue the first operating state when returning to the first detection mode even after making the transition from the first detection mode to the second detection mode in the detection step during the certain period of time in a state where the operating state of the system is controlled to the first operating state, or to control the operating state of the system to the second when making the transition to the third detection mode in the detection step; and a second operation control step to control the operating state of the system to the first operating state or the second operating state based on a processing trigger other than that in the detection step, wherein when the operating state of the system is controlled from the first operating state to the second operating state by the second operation control step though it is determined in the detection step that a person is present within the detection range in the first detection mode, a detection time in the second detection mode is changed from the certain period of time to 0, and the transition to the third detection mode is made without waiting for the certain period of time when it is determined that the person becomes absent within the detection range in the first detection mode.

The above aspects of the present invention can prevent unnecessary bootup by person detection processing when the transition to the standby state is made with a trigger other than that of detecting the leave of a person.

### BRIEF DESCRIPTION OF THE DRAWINGS

FIG. 1 is a perspective view illustrating a configuration example of the appearance of an information processing apparatus according to an embodiment.
FIG. 2 is a diagram illustrating an example of a person detection range of the information processing apparatus according to the embodiment.
FIG. 3 is an explanatory diagram of a determination method of a face orientation according to the embodiment.
FIG. 4 is a diagram illustrating an example of transitions of detection modes in HPD processing according to the embodiment.
FIG. 5 is a diagram illustrating an example of the HPD processing according to the embodiment.
FIG. 6 is a diagram illustrating a first example of the HPD processing when a transition to a standby state is made with a trigger other than the HPD processing according to the embodiment.
FIG. 7 is a diagram illustrating a second example of the HPD processing when the transition to the standby state is made with the trigger other than the HPD processing according to the embodiment.
FIG. 8 is a schematic block diagram illustrating an example of the hardware configuration of the information processing apparatus according to the embodiment.
FIG. 9 is a schematic block diagram illustrating an example of the functional configuration of the information processing apparatus according to the embodiment.
FIG. 10 is a flowchart illustrating an example of processing about a motion detection mode in the HPD processing according to the embodiment.
FIG. 11 is a flowchart illustrating an example of processing to restore the value of a motion detection timer in the HPD processing according to the embodiment.

### DETAILED DESCRIPTION OF THE INVENTION

An embodiment of the present invention will be described below with reference to the accompanying drawings.

First, the overview of an information processing apparatus 1 according to the present embodiment will be described.

### [Overview]

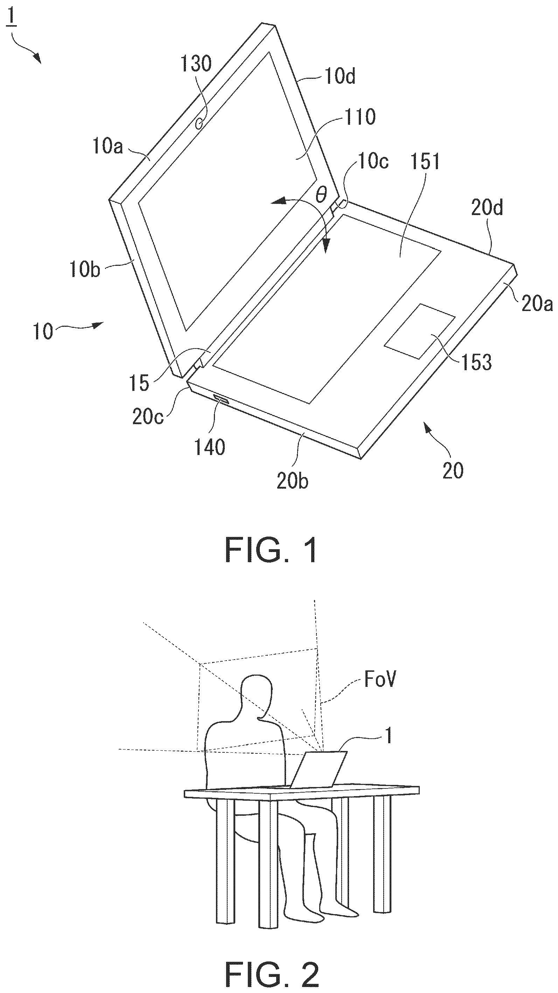

FIG. 1 is a perspective view illustrating a configuration example of the appearance of the information processing apparatus 1 according to the present embodiment. The information processing apparatus 1 is, for example, a laptop (clamshell) PC (Personal Computer).

The information processing apparatus 1 includes a first chassis 10, a second chassis 20, and a hinge mechanism 15. The first chassis 10 and the second chassis 20 are joined by using the hinge mechanism 15. The first chassis 10 is rotatable around an axis of rotation formed by the hinge mechanism 15 relative to the second chassis 20. An open angle by the rotation between the first chassis 10 and the second chassis 20 is denoted by "θ" in FIG. 1.

The first chassis 10 is also called A cover or a display chassis. The second chassis 20 is also called C cover or a system chassis. In the following description, side faces on which the hinge mechanism 15 is provided among side faces of the first chassis 10 and the second chassis 20 are referred to as side faces 10c and 20c, respectively. Among the side faces of the first chassis 10 and the second chassis 20, faces opposite to the side faces 10c and 20c are referred to as side faces 10a and 20a, respectively. In this figure, the direction from the side face 20a toward the side face 20c is referred to as "rear," and the direction from the side face 20c toward the side face 20a is referred to as "front." Further, a direction to the right when looking at the front from the information processing apparatus 1 is referred to as "right side," and a direction to the left is referred to as "left side." Side faces on the right side of the first chassis 10 and the second chassis 20 are referred to as side faces 10b and 20b, respectively, and side faces on the left side are referred to as side faces 10d and 20d, respectively. Further, a state where the first chassis 10 and the second chassis 20 overlap each other and are completely closed (a state of open angle θ = 0°) is referred to as a "closed state." Surfaces of the first chassis 10 and the second chassis 20 on the face-to-face sides in the closed state are referred to as respective "inner surfaces," and the surfaces opposite to the inner surfaces are referred to as "outer surfaces." Further, a state opposite to the closed state, where the first chassis 10 and the second chassis 20 are open, is referred to as an "open state."

The appearance of the information processing apparatus 1 in FIG. 1 illustrates an example of the open state. The open state is a state where the side face 10a of the first chassis 10 and the side face 20a of the second chassis 20 are separated. In the open state, the respective inner surfaces of the first chassis 10 and the second chassis 20 appear. The open state is one of states where a user uses the information processing apparatus 1, and the information processing apparatus 1 is often used in a state where the open angle is typically about θ = 100° to 130°. Note that the range of open angles θ to be the open state can be set arbitrarily according to the range of angles rotatable by the hinge mechanism 15, or the like.

A display unit 110 is provided on the inner surface of the first chassis 10. The display unit 110 is configured to include a liquid crystal display (LCD) or an organic EL (Electro Luminescence) display, and the like. Further, a ToF sensor 130 is provided in a peripheral area of the display unit 110 on the inner surface of the first chassis 10. For example, the ToF sensor 130 is arranged on the side of the side face 10a in the peripheral area of the display unit 110. Note that the position at which the ToF sensor 130 is arranged is just an example, and it may be elsewhere as long as the ToF sensor 130 can face a direction facing a display screen of the display unit 110.

The ToF sensor 130 is a distance measuring sensor for measuring the distance to an object (for example, a person) present in a direction facing the display screen of the display unit 110 (that is, in front of the information processing apparatus 1). For example, the ToF sensor 130 is configured to include a light-emitting part for emitting infrared light and a light-receiving part for receiving reflected light which is the infrared light returned after emitted and reflected on the surface of the object. The ToF sensor 130 emits infrared light forward in a predetermined sampling cycle (for example, 1 Hz) and receives the reflected light of the emitted infrared light to output a distance measurement signal according to the distance to the object (for example, the person) using a ToF (Time-of-Flight) method for converting, into the distance, a time difference from light emission to light reception.

Further, a power button 140 is provided on the side face 20b of the second chassis 20. The power button 140 is an operating element used by the user to give an instruction to power on or power off, make a transition from a standby state to a normal operating state, make a transition from the normal operating state to the standby state, or the like. The normal operating state is an operating state of a system capable of executing processing without being particularly limited, which corresponds, for example, to S0 state defined in the ACPI (Advanced Configuration and Power Interface) specification.

The standby state is a state in which at least part of system processing is limited and power consumption is lower than that in the normal operating state. For example, the standby state is a state in which at least the screen of the display unit 110 is turned off (hereinafter called a "screen off"), which may also be Modern standby in Windows (registered trademark), a state corresponding to S3 state (sleep state) defined in the ACPI specification, or the like.

Further, a keyboard 151 and a touch pad 153 are provided on the inner surface of the second chassis 20 as an input device (HID: Human Interface Device) to accept user operation input. Note that a touch sensor may be provided as the input device instead of or in addition to the keyboard 151 and the touch pad 153, or a mouse and an external keyboard may be connected. When the touch sensor is provided, an area corresponding to the display screen of the display unit 110 may be constructed as a touch panel to accept operations. Further, a microphone used to input voice may be included in the input device.

Note that, in the closed state where the first chassis 10 and the second chassis 20 are closed, the display unit 110 provided on the inner surface of the first chassis 10, and the keyboard 151 and the touch pad 153 provided on the inner surface of the second chassis 20 are covered with each other's chassis surfaces, and put in a state of being disabled from fulfilling the functions.

The information processing apparatus 1 executes HPD (Human Presence Detection) processing to detect a person present in front of the information processing apparatus 1 based on the distance measurement signal output by the ToF sensor 130.

FIG. 2 is a diagram illustrating an example of a distance measuring range of the ToF sensor 130 according to the present embodiment. In the open state, the ToF sensor 130 arranged on the inner surface of the first chassis 10 measures the distance to an object (for example, a person) in the direction (frontward) facing the inner surface of the first chassis 10. This ToF sensor 130 is a distance measuring sensor for detecting a person (for example, the user) present in front, and a detection range to detect the person is called a detection range FoV (Field of View: detection viewing angle). The detection range FoV corresponds to a range of angles in which the ToF sensor 130 can measure the distance.

For example, the ToF sensor 130 divides the detection range FoV into measurement units of 8×8 squares to measure a distance for each square (for each measurement unit). Note that, since the purpose is to detect a person (user) who uses the information processing apparatus 1, the distance to an object far away at a certain distance (for example, 2 m) or more may be excluded from targets to be measured. Note that it is impossible in the first place to measure the distance to an object far away at a distance at which the infrared light cannot reach.

Further, the information processing apparatus 1 detects the motion of an object detected within the detection range FoV (motion detection) to detect a person by being distinguished from objects other than the person. When there is motion in a detected object, the information processing apparatus 1 can determine that the detected object is a person.

The information processing apparatus 1 controls the operating state of the system of the information processing apparatus 1 depending on the presence or absence of a person by the HPD processing. For example, when a person approaches the information processing apparatus 1 (Approach) and it is detected that the person is present in front (Presence = True), the information processing apparatus 1 boots up the system and controls the system to the normal operating state. Further, when the person has left the information processing apparatus 1 (Leave) and the person is no longer detected in front (Presence = False), the information processing apparatus 1 controls the system to the standby state.

Further, when detecting that a person is present in front of the information processing apparatus 1, the information processing apparatus 1 detects the orientation of a face of the person based on a distance measurement signal output by the ToF sensor 130. For example, the information processing apparatus 1 determines whether or not the face of the person is facing the direction of the information processing apparatus 1 (the direction of the display unit 110). Here, it is assumed that a state where the face of the person is facing the direction of the information processing apparatus 1 (the direction of the display unit 110) (that is, a state where the face is facing forward toward the information processing apparatus 1) is a state where the person is paying attention to the information processing apparatus 1. On the other hand, it is assumed that a state where the face of the person is not facing the direction of the information processing apparatus 1 (the direction of the display unit 110) (a state where the orientation of the face toward the information processing apparatus 1 is leftward, rightward, upward, or downward, that is, the face is not facing forward toward the information processing apparatus 1) is a state where the person is not paying attention to the information processing apparatus 1.

For example, the information processing apparatus 1 may perform control to boot up the system or control of the screen brightness of the display unit 110 (dimming control) based on the determination result of the face orientation. Specifically, when the face orientation is turned to a state where the face is not facing forward (the state where the person is not paying attention to the information processing apparatus 1), the information processing apparatus 1 reduces the screen brightness of the display unit 110 to save power. Further, when the face orientation is turned to front facing again (when the person is paying attention to the information processing apparatus 1 again), the information processing apparatus 1 restores the screen brightness to an original screen brightness before being reduced.

### (Face Orientation Determination Method)

Here, a determination method of determining a face orientation based on a distance measurement signal output from the ToF sensor 130 will be described. In the present embodiment, the information processing apparatus 1 determines a front, left, right, up, or down orientation as the face orientation. The left/right orientation is an orientation of the face in the horizontal direction corresponding to the direction of rotation with the vertical axis passing through the center of the face as the central axis. Further, the up/down orientation is an orientation of the face in the vertical direction corresponding to the direction of rotation with the horizontal axis passing through the center of the face as the central axis.

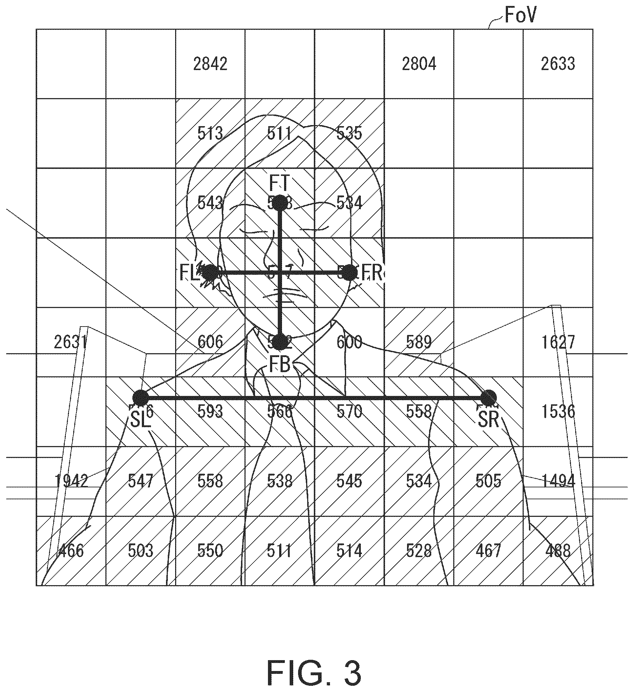

FIG. 3 is an explanatory diagram of the determination method of the face orientation according to the present embodiment. In this figure, the detection range FoV is divided into 64-square measurement units of 8×8 squares, and an example of a distance measurement value for each square (each measurement unit) is numerically represented in each square. For example, the distance measurement value in each squire is a distance measurement value measured by the ToF sensor 130 in a predetermined cycle (for example, at one second interval). Since any person moves to some extent, the distance measurement value in each square is constantly changing. Therefore, the distance measurement values measured in predetermined cycles (for example, at one second intervals) may be time-averaged to obtain a reliable distance measurement value.

In this figure, the unit of a distance measurement value numerically represented in each square is millimeters. In the illustrated example, a range of squares with distance measurement values of 450 to 610 is a range in which a person is present. Squares with distance measurement values of 1000 or more are distance measurement values of a ceiling and an object behind the person. Further, squares without any distance measurement value are squares that are impossible to measure distances because objects are too far away.

The range of the person is characterized in that the edge of the range generally has a mountain shape, and the width of a part above the shoulders of a body is shorter than the shoulder width. For example, when the edge of a range of squares, in which the distance measurement values are obtained within 1 m (1000 mm) with small differences thereamong (here, about 450 to 610), becomes a mountain shape having the characteristics of a person, the information processing apparatus 1 detects the range as a range of the person (that is, detects that the person is present). In the illustrated example, six squares lined up from a square marked with SL (Shoulder Left) to a square marked with SR (Shoulder Right) in the horizontal direction (the left and right direction) correspond to a shoulder range (shoulder width), and the width of the part above the shoulder range is shorter than the shoulder width.

Further, the information processing apparatus 1 detects, as a face range, a range above the shoulder range and narrower in left and right width than the shoulder range. For example, the information processing apparatus 1 detects, as a face range, 3(horizontal)×4 (vertical) squares above the shoulder range within the person range. The size of this face range corresponds to a range of a face of the person present at a distance at which the information processing apparatus 1 is used (keyboard operations are performed) when distances are measured by dividing the detection range FoV into 8×8 squares.

Note that the information processing apparatus 1 may also detect, as the face range, 3×3 squares above the shoulder range within the person range. Further, when distance measurements are made in measurement units of the detection range FoV other than 8×8 squares, the face range is also set to a range according to the number of measurement units instead of 3×4 squares or 3×3 squares.

Further, as illustrated, it is assumed that the center square in the face range is the center of the face, and a distance measurement value in a square marked with FT (Face Top) above the center square is a distance measurement value of a top part of the face (forehead position). It is also assumed that a distance measurement value in a square marked with FB (Face Bottom) below the center square is a distance measurement value of a bottom part of the face (chin position). It is further assumed that a distance measurement value in a square marked with FL (Face Left) on the left side of the center square is a distance measurement value of a left part of the face. Further, it is assumed that a distance measurement value in a square marked with FR (Face Right) on the right side of the center square is a distance measurement value of a right part of the face.

Note that when the face range is composed of 3×3 squares, the center square in the face range is a center square of the 3×3 squares, while when the face range is composed of 3(horizontal)×4 (vertical) squares, the center square is either a square in the second row and the center column or a square in the third row and the center column. Here, the lower square (the square in the third row) is prioritized as the center square.

Note that the upper square (the square in the second row) may also be prioritized as the center square. Further, the distance measurement values in both of the squares may be tracked to prioritize, as the center square, a square smaller in distance measurement value, or prioritize, as the center square, a square larger in the amount of variation (amount of movement) of the distance measurement value.

The information processing apparatus 1 determines the orientation of the face based on the distance measurement values in the top part, bottom part, left part, and right part of the face. For example, the information processing apparatus 1 determines the orientation of the face in the vertical direction (up and down direction) based on a difference between the distance measurement value in the top part of the face and the distance measurement value in the bottom part of the face. Further, the information processing apparatus 1 determines the orientation of the face in the horizontal direction (left and right direction) based on a difference between the distance measurement value in the left part of the face and the distance measurement value in the right part of the face.

For example, when the difference between the distance measurement value in the top part of the face and the distance measurement value in the bottom part of the face is a predetermined threshold value or more, and the distance measurement value in the top part of the face is smaller than the distance measurement value in the bottom part of the face, the information processing apparatus 1 determines that the orientation of the face is downward. On the other hand, when the difference between the distance measurement value in the top part of the face and the distance measurement value in the bottom part of the face is the predetermined threshold value or more, and the distance measurement value in the bottom part of the face is smaller than the distance measurement value in the top part of the face, the information processing apparatus 1 determines that the orientation of the face is upward.

Further, when the difference between the distance measurement value in the left part of the face and the distance measurement value in the right part of the face is the predetermined threshold value or more, and the distance measurement value in the left part of the face is smaller than the distance measurement value in the right part of the face, the information processing apparatus 1 determines that the orientation of the face is rightward. On the other hand, when the difference between the distance measurement value in the left part of the face and the distance measurement value in the right part of the face is the predetermined threshold value or more, and the distance measurement value in the right part of the face is smaller than the distance measurement value in the left part of the face, the information processing apparatus 1 determines that the orientation of the face is leftward.

Further, when the difference between the distance measurement value in the top part of the face and the distance measurement value in the bottom part of the face is less than the predetermined threshold value, and the difference between the distance measurement value in the left part of the face and the distance measurement value in the right part of the face is less than the predetermined threshold value, the information processing apparatus 1 determines that the face is facing forward. Thus, the information processing apparatus 1 determines whether the orientation of the face is upward or downward, leftward or rightward, or forward based on the distance measurement values in the top part, bottom part, left part, and right part of the face to determine the orientation of the face.

Note that the information processing apparatus 1 may also determine the orientation of the face in the vertical direction (up and down direction) and the horizontal direction (left and right direction) depending on in which part the distance measurement value is the smallest among the top part, bottom part, left part, and right part of the face. Further, when the differences among the distance measurement values in the top part, bottom part, left part, and right part of the face are less than the predetermined threshold value, the information processing apparatus 1 may determine that the face is facing forward.

### (Detection Mode Control in HPD Processing)

The information processing apparatus 1 not only controls the operating state of the system according to the detection result by the HPD processing, but also changes a detection mode in the HPD processing. For example, when performing the HPD processing in the normal operating state, the information processing apparatus 1 detects both the motion of an object and the orientation of a face for detecting a person, but in the standby state, the information processing apparatus 1 detects only the presence or absence of an object at low frame rates without detecting both the motion of the object and the orientation of a face to reduce power consumption.

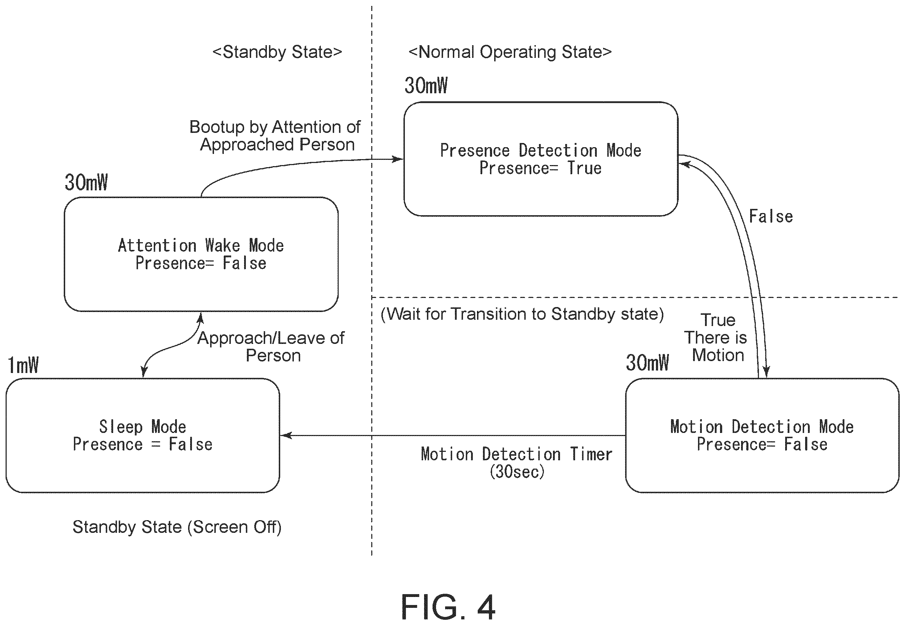

FIG. 4 is a diagram illustrating an example of transitions of detection modes in the HPD processing according to the present embodiment. In the normal operating state, the HPD processing is performed in a presence detection mode. For example, the presence detection mode is a detection mode in which processing to detect both the motion of an object and the orientation of a face for detecting a person is performed with high power consumption (for example, 30 mW). For example, in the presence detection mode, an object present within the detection range FoV is detected using the ToF sensor 130, and based on the detection result, the presence or absence of a person within the detection range FoV is determined. Specifically, when it is determined that a person becomes absent (Presence = False) from a state where the person is present within the detection range FoV (Presence = True), a transition of the presence detection mode to a motion detection mode is made.

The motion detection mode is a detection mode in which a transition to the standby state is made after a state of detecting the absence of a person continues for a certain period of time, rather than an immediate transition to the standby state when the absence of a person is detected in the presence detection mode. This motion detection mode is provided to wait for the transition to the standby state when the absence (leave) of the person is temporary or false positive so that a person will be detected to return to the normal operating state before the transition to the standby state is unnecessarily made, which is a detection mode in which processing is performed with high power consumption (for example, 30 mW) like in the presence detection mode.

For example, when the motion of an object is detected within the detection range FoV using the ToF sensor 130 during the certain period of time, it is determined that a person is present within the detection range FoV (Presence = True), and the motion detection mode is returned to the presence detection mode. Further, when the motion of an object is not detected within the detection range FoV during the certain period of time, a transition from the motion detection mode to a sleep mode is made. In the following, a timer that measures the certain period of time mentioned above in this motion detection mode is called a "motion detection timer." The motion detection timer is set, for example, to 30 seconds.

When the transition from the normal operating state to the standby state (screen off) is made, the HPD processing is performed in the sleep mode. The sleep mode is a detection mode to detect an object present within the detection range FoV with power consumption (for example, 1 mW) lower than that of the presence detection mode and the motion detection mode. In the sleep mode, only the presence or absence of an object within the detection range FoV is detected at low frame rates without determining the motion of the object and the orientation of a face. In other words, the sleep mode is a detection mode in which the presence or absence of an object within the detection range FoV is simply detected to detect the approach of a person from a state where the person has left and is absent (Presence = False). A transition to the presence detection mode is made due to the fact that the person is determined to be present within the detection range FoV in the sleep mode (that the approach of the person is detected), and the system is controlled from the standby state to the normal operating state.

Note that when the approach of a person is detected in the sleep mode, the transition to the presence detection mode may be made to control the system from the standby state to the normal operating state, but the example in FIG. 4 illustrates an example of controlling the system from the standby state to the normal operating state after not only the approach of a person but also the orientation of a face of the approached person are determined.

For example, when the approach of a person is detected in the sleep mode, a transition to an attention wake mode is temporarily made. The attention wake mode is a detection mode performed with high power consumption (for example, 30 mW) like the presence detection mode, where the orientation of a face of the person detected within the detection range FoV is also determined. In the attention wake mode, only a person with a face facing forward (a person paying attention to the information processing apparatus 1) is determined to be the user to make the transition to the presence detection mode, boot up the system and control the system to the normal operating state. On the other hand, when the leave of the person is detected in the attention wake mode, the attention wake mode is returned to the sleep mode.

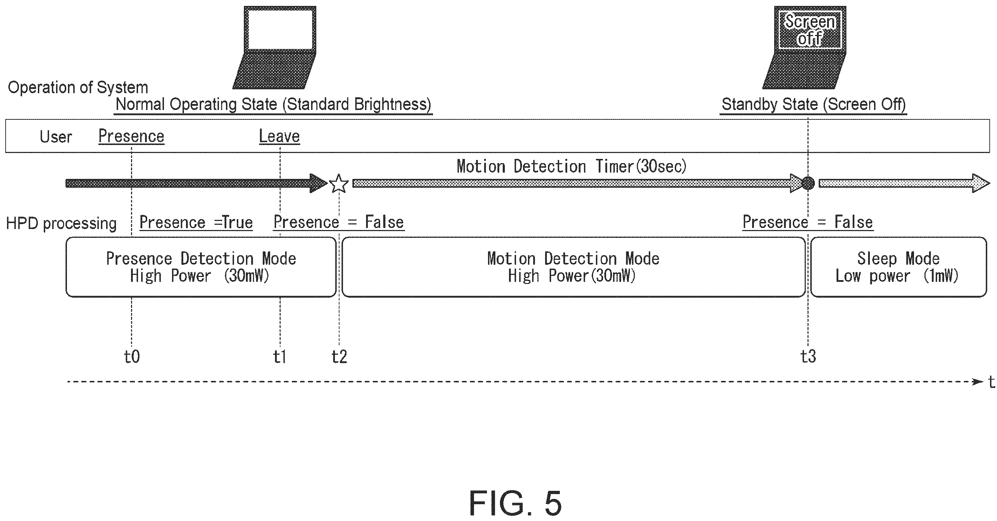

Referring next to FIG. 5, HPD processing when causing the system to make the transition to the standby state in response to detecting the leave of a person will be described. FIG. 5 is a diagram illustrating an example of HPD processing according to the present embodiment. In this figure, the operation of the system, the state of the user, and the HPD processing are illustrated in chronological order with the horizontal axis representing time (t).

At time t0, it is a state where the user is present in front of the information processing apparatus 1 (within the detection range FoV). The information processing apparatus 1 is such that the brightness of the screen of the display unit 110 in the normal operating state is a standard brightness. In the presence detection mode, the information processing apparatus 1 executes the HPD processing to detect that a person is present within the detection range FoV, and sets the detection result of the HPD processing to "Presence = True."

At time t1, when the user leaves, the information processing apparatus 1 no longer detects any person (moving object) within the detection range FoV by the HPD processing. At time t2, the information processing apparatus 1 determines that the person is absent, sets the detection result of the HPD processing to "Presence = False," and makes the transition to the motion detection mode. Further, when making the transition to the motion detection mode, the information processing apparatus 1 starts timekeeping of the motion detection timer.

In the motion detection mode, when the motion of an object is detected within the detection range FoV before the timekeeping of the motion detection timer (for example, 30 seconds) is ended, the information processing apparatus 1 determines that a person is present within the detection range FoV, and sets the detection result of the HPD processing to "Presence = True" to return the motion detection mode to the presence detection mode. On the other hand, in the motion detection mode, when the motion of an object is not detected within the detection range FoV until the timekeeping of the motion detection timer (for example, 30 seconds) is ended, the information processing apparatus 1 makes the transition to the sleep mode at time t3, and causes the system to make the transition to the standby state (screen off).

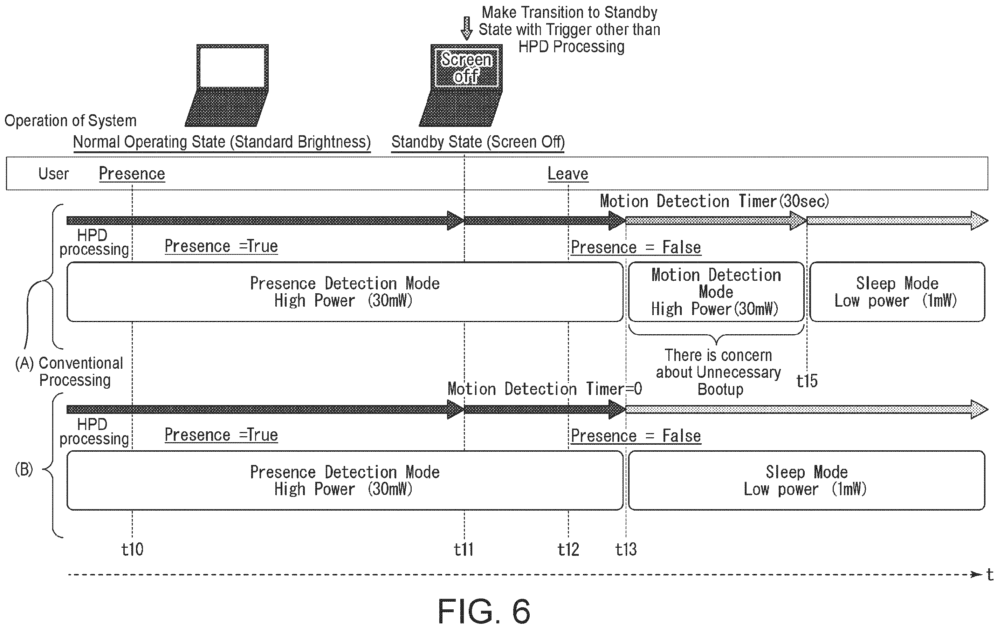

Here, as illustrated in FIG. 6, there is any trigger other than that the leave of a person is detected by the HPD processing to make the transition to the standby state. As the trigger to make the transition to the standby state other than the HPD processing, there is a function to turn off the screen and make the transition to the standby state (a so-called sleep function) when a present time has elapsed with no input (HID input) by the user, for example, as a function of an OS (Operating System). Further, the transition to the standby state may be made by the user performing an operation to make the transition to the standby state (an operation of the power button, a sleep command operation, or the like).

Thus, when the transition to the standby state with any trigger other than that of the HPD processing is made, there may be a case where the presence of a person is detected by the HPD processing (Presence = True). In this case, the information processing apparatus 1 operates in the presence detection mode, and when the leave of the person is detected, the transition to the motion detection mode is made as illustrated in FIG. 5 in conventional HPD processing. Since processing to detect the motion of an object to return to the normal operating state is performed in the motion detection mode, it has the advantage of not making an unnecessary transition to the standby state when making the transition to the standby state using the leave of a person by the HPD processing as a trigger as illustrated in FIG. 5. However, in a case where the transition to the standby state is made with a trigger other than the HPD processing, when the leave of the person is detected after that to make the transition to the motion detection mode, there is a concern that unnecessary bootup may be done by detecting the motion of an object even if a person just cuts across the front of the information processing apparatus 1.

Therefore, when it is determined in the HPD processing that the presence of a person is detected in the presence detection mode upon the transition to the standby state, the information processing apparatus 1 according to the present embodiment changes a motion detection time in the motion detection mode to 0. Thus, when the person is determined to be absent in the presence detection mode (Presence = False), the information processing apparatus 1 makes the transition to the sleep mode without making the transition to the motion detection mode. A comparison between the conventional processing and the processing of the present embodiment at this time is illustrated in FIG. 6.

FIG. 6 is a diagram illustrating a first example of HPD processing when the transition to the standby state is made with a trigger other than the HPD processing according to the present embodiment. In this figure, the operation of the system, the state of the user, and the HPD processing are illustrated in chronological order with the horizontal axis representing time (t) like in FIG. 5, where (A) illustrates the conventional processing and (B) illustrates the processing according to the present embodiment.

At time t10, it is a state where the user is present in front of the information processing apparatus 1 (within the detection range FoV). The information processing apparatus 1 is in the normal operating state and the brightness of the screen of the display unit 110 is the standard brightness. The information processing apparatus 1 executes the HPD processing in the presence detection mode to detect that a person is present within the detection range FoV, and sets the detection result of the HPD processing to "Presence = True."

At time t11, it is assumed that the information processing apparatus 1 makes the transition to the standby state (screen off) with a trigger other than the HPD processing such as the sleep function of the OS or an operation to make the transition to the standby state (the operation of the power button, the sleep command operation or the like). At this time, the information processing apparatus 1 continues executing the HPD processing in the presence detection mode, and when the user leaves at time t12, the information processing apparatus 1 no longer detects the person (moving object) within the detection range FoV by the HPD processing. At time t13, the information processing apparatus 1 determines that the person is absent, and sets the detection result of the HPD processing to "Presence = False."

Here, in the conventional processing illustrated at (A), the information processing apparatus 1 makes the transition to the motion detection mode at time t13, and makes the transition to the sleep mode at time t15 after the end of the timekeeping of the motion detection timer (for example, 30 seconds). Therefore, when the motion of an object is detected within the detection range FoV before the timekeeping of the motion detection timer (for example, 30 seconds) is ended, the information processing apparatus 1 may determine that a person is present within the detection range FoV (Presence = True) to boot up the system. Thus, there is a concern that unnecessary bootup may be done by detecting the motion of an object even if a person just cuts across the front of the information processing apparatus 1.

Therefore, when the transition to the standby state (screen off) is made in the state where the detection result of the HPD processing is "Presence = True" as illustrated at (B) (at time t11), the information processing apparatus 1 according to the present embodiment changes the motion detection time to 0. Thus, when the person is determined to be absent (Presence = False) in the presence detection mode (at time t13), the information processing apparatus 1 makes the transition to the sleep mode without making the transition to the motion detection mode to prevent unnecessary bootup.

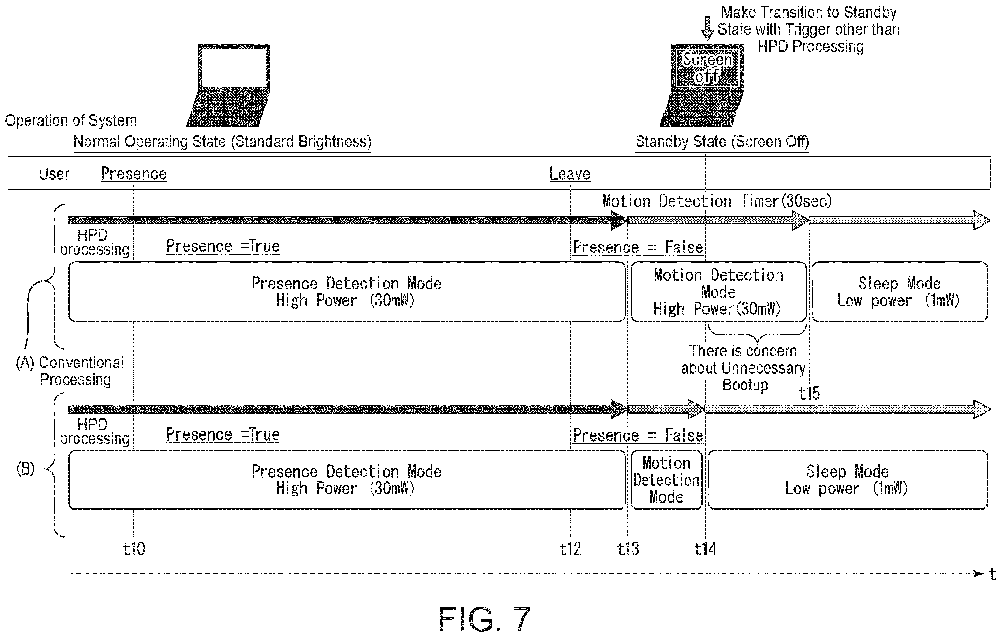

The example illustrated in FIG. 6 is an example of the HPD processing when the transition to the standby state is made with a trigger other than the HPD processing during the presence detection mode. Next, HPD processing when the transition to the standby state is made with a trigger other than the HPD processing during the motion detection mode will be described with reference to FIG. 7.

FIG. 7 is a diagram illustrating a second example of the HPD processing when the transition to the standby state is made with a trigger other than the HPD processing according to the present embodiment. In this figure, the operation of the system, the state of the user, and the HPD processing are illustrated in chronological order with the horizontal axis representing time (t) like in FIG. 6, where (A) illustrates the conventional processing and (B) illustrates the processing according to the present embodiment.

In the conventional processing illustrated at (A), although the information processing apparatus 1 makes the transition to the motion detection mode at time t13 and makes the transition to the sleep mode at time t15 after the end of the timekeeping of the motion detection timer (for example, 30 seconds), it is assumed that the transition to the standby state (screen off) is made with a trigger other than the HPD processing at time t14 before the timekeeping of the motion detection timer is ended. In this case, there is a concern that unnecessary bootup may be done by detecting the motion of an object even if a person just cuts across the front of the information processing apparatus 1 during a period between t14 to t15.

Therefore, when the transition to the standby state is made with a trigger other than the HPD processing at time t14 during the motion detection mode as illustrated at (B), the information processing apparatus 1 according to the present embodiment makes the transition from the motion detection mode to the sleep mode at that point to prevent unnecessary bootup.

### [Hardware Configuration of Information Processing Apparatus]

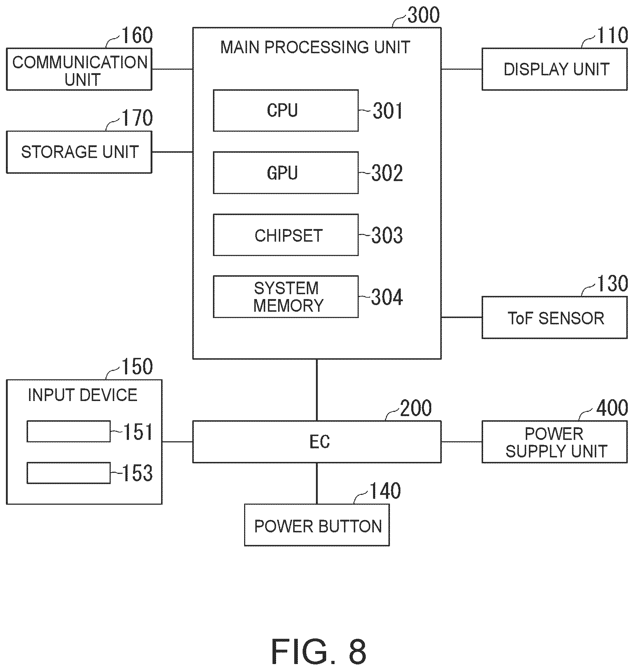

FIG. 8 is a schematic block diagram illustrating an example of the hardware configuration of the information processing apparatus 1 according to the present embodiment. In FIG. 8, components corresponding to respective units in FIG. 1 are given the same reference numerals. The information processing apparatus 1 is configured to include the display unit 110, the ToF sensor 130, a power button 140, an input device 150, a communication unit 160, a storage unit 170, an EC (Embedded Controller) 200, a main processing unit 300, and a power supply unit 400.

The display unit 110 displays display data (images) generated based on system processing executed by the main processing unit 300, processing of application programs running on the system processing, and the like.

As described above, the ToF sensor 130 is a distance measuring sensor for detecting the distance to an object (for example, a person) present in front using the ToF method. For example, the ToF sensor 130 outputs a distance measurement signal including a distance measurement value obtained by measuring the distance to the object (for example, the person) present within the detection range FoV in the direction (frontward) facing the inner surface of the first chassis 10.

The power button 140 outputs, to the EC 200, an operation signal according to a user operation. The input device 150 is an input unit for accepting user input, which is configured to include, for example, the keyboard 151 and the touch pad 153. In response to accepting operations on the keyboard 151 and the touch pad 153, the input device 150 outputs, to the EC 200, operation signals indicative of the operation details.

The communication unit 160 is connected to other devices communicably through a wireless or wired communication network to transmit and receive various data. For example, the communication unit 160 is configured to include a wired LAN interface such as Ethernet (registered trademark), a wireless LAN interface such as Wi-Fi (registered trademark), and the like.

The storage unit 170 is configured to include storage media, such as an HDD (Hard Disk Drive) or an SSD (Solid State Drive), a RAM, a ROM, and the like. The storage unit 170 stores the OS, device drivers, various programs such as applications, and various data acquired by the operation of the programs.

The power supply unit 400 supplies power to each unit according to the operating state of each unit of the information processing apparatus 1. The power supply unit 400 includes a DC (Direct Current)/DC converter. The DC/DC converter converts the voltage of DC power, supplied from an AC (Alternate Current)/DC adapter or a battery (battery pack), to a voltage required for each unit. The power with the voltage converted by the DC/DC converter is supplied to each unit through each power system. For example, the power supply unit 400 supplies power to each unit through each power system based on a control signal input from the EC 200.

The EC 200 is a microcomputer configured to include a CPU (Central Processing Unit), a RAM (Random Access Memory), a ROM (Read Only Memory), an I/O (Input/Output) logic circuit, and the like. The CPU of the EC 200 reads a control program (firmware) prestored in the own ROM, and executes the read control program to fulfill the functionality. The EC 200 operates independently of the main system processing unit 300 to control the operation of the main processing unit 300 and manage the operating state of the main processing unit 300. Further, the EC 200 is connected to the power button 140, the input device 150, the power supply unit 400, and the like.

For example, the EC 200 communicates with the power supply unit 400 to acquire information on a battery state (remaining battery capacity, and the like) from the power supply unit 400 and to output, to the power supply unit 400, a control signal or the like in order to control the supply of power according to the operating state of each unit of the information processing apparatus 1. Further, the EC 200 acquires operation signals from the power button 140 and the input device 150, and outputs, to the main processing unit 300, an operation signal related to processing of the main processing unit 300 among the acquired operation signals.

The main processing unit 300 is configured to include a CPU (Central Processing Unit) 301, a GPU (Graphic Processing Unit) 302, a chipset 303, and a system memory 304, where processing of various application programs is executable on the OS (Operating System) by system processing based on the OS.

The CPU 301 is a processor to execute processing based on a BIOS program, processing based on the OS program, processing based on application programs running on the OS, and the like. For example, the CPU 301 executes boot processing to boot the system from the standby state and make the transition to the normal operating state, sleep processing to make the transition from the normal operating state to the standby state, and the like. Further, the CPU 301 executes screen brightness control processing to control the screen brightness of the display unit 110 based on the determination result of the orientation of the face described above, and the like.

The GPU 302 is connected to the display unit 110. The GPU 302 executes image processing under the control of the CPU 301 to generate display data. The GPU 302 outputs the generated display data to the display unit 110.

The chipset 303 has a function as a memory controller, a function as an I/O controller, and the like. For example, the chipset 303 controls reading data from and writing data to the system memory 304, the storage unit 170, and the like by the CPU 301 and the GPU 302. Further, the chipset 303 controls input/output of data from the communication unit 160, the display unit 110, and the EC 200. Further, the chipset 303 has a function as a sensor hub. For example, the chipset 303 acquires distance measurement signals and the like output from the ToF sensor 130 to execute various processing such as the HPD processing.

The system memory 304 is used as a reading area of a program executed by the CPU 301 and a working area to write processed data.

Note that the CPU 301, the GPU 302, and the chipset 303 may also be integrated as one processor, or some or each of them may be configured as an individual processor, respectively. For example, in the normal operating state, the CPU 301, the GPU 302, and the chipset 303 are all operating, but in the standby state, only at least some of the functions of the chipset 303 are operating.

### [Functional Configuration of Information Processing Apparatus]

Next, the functional configuration of the information processing apparatus 1 to control the operating state of the system by the HPD processing or with a trigger other than the HPD processing will be described in detail.

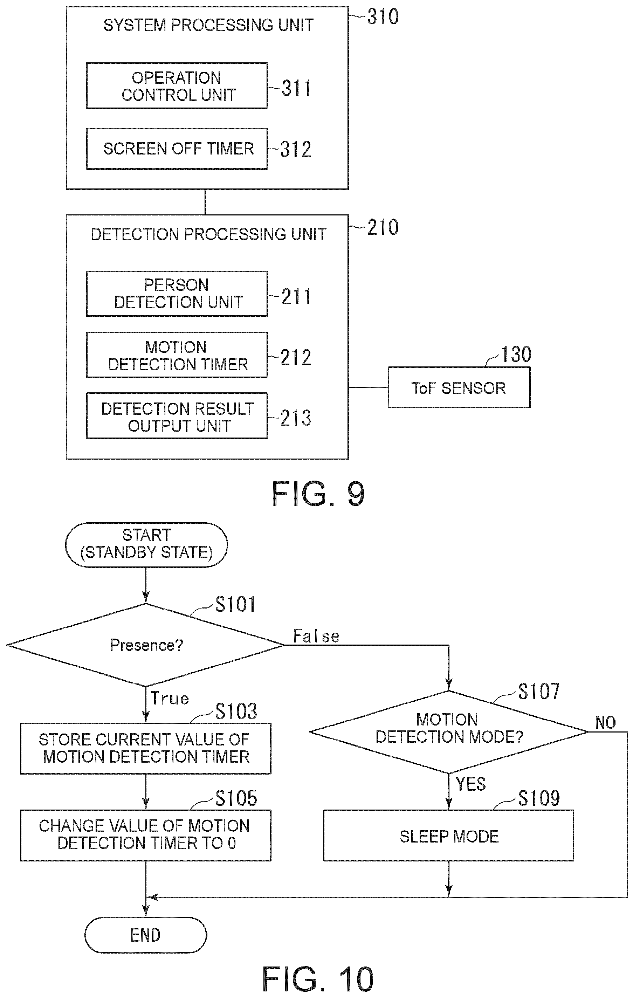

FIG. 9 is a schematic block diagram illustrating an example of the functional configuration of the information processing apparatus 1 according to the present embodiment. The information processing apparatus 1 includes a detection processing unit 210 that performs the HPD processing based on a distance measurement signal from the ToF sensor 130, and a system processing unit 310 that performs system processing based on the programs of the BIOS and the OS, and the detection result by the detection processing unit 210.

The detection processing unit 210 includes a person detection unit 211, a motion detection timer 212, and a detection result output unit 213 as functional components to perform the HPD processing described above by the CPU 301 or the chipset 303 executing a specific program.

The person detection unit 211 performs HPD processing to detect or determine a person within the detection range FoV, the orientation of a face of the person, and the like based on distance measurement values of the ToF sensor 130. Specifically, the person detection unit 211 performs the HPD processing by switching among the presence detection mode, the motion detection mode, and the sleep mode or the attention wake mode.

In the presence detection mode, the person detection unit 211 detects an object present within the detection range FoV using the ToF sensor 130, and determines the presence or absence of a person within the detection range FoV based on the detection result. For example, when determining that the person becomes absent within the detection range FoV in the presence detection mode, the person detection unit 211 makes the transition to the motion detection mode.

In the motion detection mode, the person detection unit 211 starts timekeeping of the motion detection timer 212 (for example, 30 seconds) in response to the transition to the motion detection mode. The person detection unit 211 detects the motion of an object within the detection range FoV until the end of the timekeeping of the motion detection timer 212. When the object is a person, since there is motion (for example, minute motion), the person detection unit 211 determines that a completely stationary object is not a person, and detects only a moving object (for example, minute motion) as a person. For example, the person detection unit 211 determines whether or not the object is a moving object based on the amount of variation in distance measurement values of the ToF sensor 130 measured in predetermined cycles (for example, at one second intervals).

For example, when the motion of an object is detected within the detection range FoV until the end of the timekeeping of the motion detection timer 212 in the motion detection mode, the person detection unit 211 returns to the presence detection mode. Further, when the motion of an object is not detected within the detection range FoV until the end of the timekeeping of the motion detection timer 212 in the motion detection mode, the person detection unit 211 makes the transition to the sleep mode.

In the sleep mode, the person detection unit 211 detects an object present within the detection range FoV with power consumption lower than the presence detection mode and the motion detection mode. For example, in the sleep mode, the person detection unit 211 detects only the presence or absence of an object at low frame rates without detecting the motion of the object to detect a person.

Further, the person detection unit 211 makes the transition from the sleep mode to the presence detection mode due to the fact that a person is determined to be present within the detection range FoV in the sleep mode. For example, in the HPD processing, when determining that a person is present within the detection range FoV in the sleep mode, the information processing apparatus 1 makes the transition to the attention wake mode.

In the attention wake mode, the person detection unit 211 also determines the orientation of a face of the person detected within the detection range FoV, and makes the transition from the sleep mode to the presence detection mode only when the face is facing forward (playing attention to the information processing apparatus 1). Note that when the leave of a person is detected in the attention wake mode after the person is determined to be present within the detection range FoV in the sleep mode, the person detection unit 211 returns to the sleep mode.

Further, when the operating state of the system is controlled from the normal operating state to the standby state based on a processing trigger other than the HPD processing though it is determined in the HPD processing that a person is present within the detection range FoV in the presence detection mode, the person detection unit 211 changes the setting time of the motion detection timer 212 to 0. Thus, when the person within the detection range FoV is determined to be absent in the presence detection mode after that, the person detection unit 211 makes the transition to the sleep mode without waiting for the certain period of time (for example, 30 seconds) (see FIG. 6(B)).

Further, when the operating state of the system is controlled from the normal operating state to the standby state based on the processing trigger other than the HPD processing during the motion detection mode in the HPD processing, the information processing apparatus 1 ends the motion detection timer 212 even in the middle of the timekeeping, and makes the transition to the sleep mode at that point without waiting for the certain period of time (for example, 30 seconds) (see FIG. 7(B)).

When it is determined by the person detection unit 211 that a person is present within the detection range FoV, the detection result output unit 213 sets and outputs "Presence = True" as the detection result of the HPD processing. Further, when the person is no longer detected within the detection range FoV by the person detection unit 211, the detection result output unit 213 sets and outputs "Presence = False.

The system processing unit 310 is a functional component implemented by the CPU 301 performing the BIOS and OS programs. For example, the system processing unit 310 includes an operation control unit 311 and a screen off timer 312 as functional components implemented by executing the OS program.

The operation control unit 311 performs first operation control processing (operation control processing by the HPD processing) and second operation control processing (operation control processing by processing other than the HPD processing).

In the first operation control processing, the operation control unit 311 controls the operating state of the system based on the detection result of the HPD processing by the detection processing unit 210. For example, when returning to the presence detection mode during the certain period of time even after making the transition from the presence detection mode to the motion detection mode in such a state that the operating state of the system is controlled to the normal operating state, the operation control unit 311 continues the normal operating state, while when making the transition to the sleep mode in the HPD processing, the operation control unit 311 controls the operating state of the system to the standby state. Further, when making the transition from the sleep mode to the presence detection mode via the attention wake by the HPD processing, the operation control unit 311 controls the operating state of the system from the standby state to the normal operating state.

Further, in the second operation control processing, the operation control unit 311 controls the operating state of the system to the normal operating state or the standby state based on the processing trigger other than the HPD processing. For example, when such a state that a present period of time has elapsed with no input (HID input) by the user, or when there is input by the user to make the transition to the standby state (the operation of the power button, the sleep command operation, or the like), the operation control unit 311 controls the operating state of the system to the normal operating state or the standby state based on the processing trigger other than the HPD processing. The screen off timer 312 is a timer for timekeeping of a period without input (HID input) by the user.

Further, when there is input by the user to make the transition to the normal operating state (the operation of the power button, the sleep command operation, or the like), the operation control unit 311 controls the operating state of the system to the normal operating state or the standby state based on the processing trigger other than the HPD processing.

### [Operation of HPD Processing]

Next, the operation of processing about the motion detection mode in the HPD processing when the operating state of the system is controlled from the normal operating state to the standby state based on the processing trigger other than the HPD processing described with reference to FIG. 6(B) and FIG. 7(B) will be described with reference to FIG. 10.

FIG. 10 is a flowchart illustrating an example of processing about the motion detection mode in the HPD processing according to the present embodiment.

(Step S101) When the operating state of the system becomes the standby state based on the processing trigger other than the HPD processing, the detection processing unit 210 determines whether or not a person is present within the detection range FoV (Presence). When determining that the person is present (Presence = True), the detection processing unit 210 proceeds to a process in step 103. On the other hand, when determining that no person is present (Presence = False), the detection processing unit 210 proceeds to a process in step S107.

(Step S103) The detection processing unit 210 stores the current value of the motion detection timer 212. Then, the detection processing unit 210 proceeds to a process in step S105.

(Step S105) The detection processing unit 210 changes the value of the motion detection timer 212 to 0, and ends the processing.

(Step S107) The detection processing unit 210 determines whether or not the time when the operating state of the system becomes the standby state is during the motion detection mode. When determining that the operating state of the system becomes the standby state during the motion detection mode (YES), the detection processing unit 210 proceeds to a process in step S109. On the other hand, when determining that the time when the operating state of the system becomes the standby state is not during the motion detection mode (NO), the processing is ended because the transition from the motion detection mode to the sleep mode is already made.

(Step S109) The detection processing unit 210 makes the transition from the motion detection mode to the sleep mode.

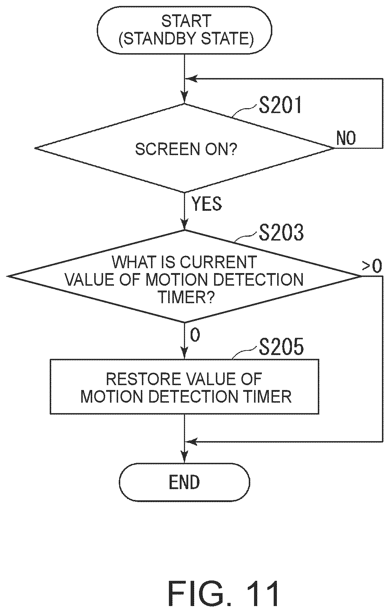

Next, the operation of processing when the value of the motion detection timer 212 is restored after the value is changed to 0 by the processing illustrated in FIG. 10 will be described with reference to FIG. 11.

FIG. 11 is a flowchart illustrating an example of processing for restoring the value of the motion detection timer 212 in the HPD processing according to the present embodiment.

(Step S201) The detection processing unit 210 determines whether or not the operating state of the system becomes the normal operating state (screen on) from the standby state. When determining that the operating state does not become the normal operating state (screen on) (NO), the detection processing unit 210 performs the process in step S201 again. On the other hand, when determining that the operating state becomes the normal operating state (screen on) (YES), the detection processing unit 210 proceeds to a process in step S203.

(Step S203) The detection processing unit 210 determines the current value of the motion detection timer 212. When determining that the current value of the motion detection timer 212 is 0, the detection processing unit 210 proceeds to a process in step S205 to restore the value of the motion detection timer 212 to the value stored in step S103 of FIG. 10.

On the other hand, when determining in step S203 that the current value of the motion detection timer 212 is larger than 0 (that is, that the current value is not changed to 0), the detection processing unit 210 ends the processing because there is no need to restore the value of the motion detection timer 212.

### [Summary of Embodiment]

As described above, the information processing apparatus 1 according to the present embodiment includes the ToF sensor 130 (an example of a sensor) for detecting an object present within the predetermined detection range FoV, and a processor (for example, the CPU 301, the chipset 303, and the like) which controls the operating state of the system to the normal operating state (an example of a first operating state) or the standby state (an example of a second operating state) with power consumption lower than the normal operating state. The information processing apparatus 1 performs HPD processing (an example of detection processing) at least having the presence detection mode (an example of a first detection mode), the motion detection mode (an example of a second detection mode), and the sleep mode (an example of a third detection mode). For example, in the presence detection mode, the information processing apparatus 1 detects an object present within the detection range FoV using the ToF sensor 130, and determines the presence or absence of a person within the detection range FoV based on the detection result. Then, the information processing apparatus 1 makes the transition to the motion detection mode when determining that the person becomes absent within the detection range FoV in the presence detection mode. Further, in the motion detection mode, the information processing apparatus 1 returns to the presence detection mode when the motion of an object is detected within the detection range FoV using the ToF sensor 130 during the certain period of time (for example, 30 seconds), or makes the transition to the sleep mode when the motion of an object is not detected within the detection range FoV during the certain period of time. Note that the sleep mode is a detection mode to detect an object present within the detection range FoV with power consumption lower than the presence detection mode and the motion detection mode. Further, the information processing apparatus 1 performs first operation control processing (operation control processing by the HPD processing) and second operation control processing (operation control processing by processing other than the HPD processing. For example, in the first operation control processing, the information processing apparatus 1 continues the normal operating state when returning to the presence detection mode during the certain period of time even after making the transition from the presence detection mode to the motion detection mode in the HPD processing in a state where the operating state of the system is controlled to the normal operating state, or controls the operating state of the system to the standby state when making the transition to the sleep mode in the HPD processing. Further, in the second operation control processing, the information processing apparatus 1 controls the operating state of the system to the normal operating state or the standby state based a processing trigger other than the HPD processing. Then, when the operating state of the system is controlled from the normal operating state to the standby state based on the processing trigger other than the HPD processing though it is determined in the HPD processing that a person is present within the detection range FoV in the presence detection mode, the information processing apparatus 1 changes the detection time (the setting time of the motion detection timer) in the motion detection mode from the certain period of time (for example, 30 seconds) to 0, and makes the transition to the sleep mode without waiting for the certain period of time when determining that the person becomes absent within the detection range in the presence detection mode.

Thus, when the transition of the operating state of the system to the standby state is made with a trigger other than that of detecting the leave of the person by the HPD processing, since the information processing apparatus 1 makes the transition to the sleep mode without making the transition to the motion detection mode even when the leave of the person is detected after that, it is possible to prevent unnecessary bootup by the HPD processing. Therefore, the information processing apparatus 1 can control the HPD processing properly.

Further, when controlling the operating state of the system from the normal operating state to the standby state based on the processing trigger other than the HPD processing during the motion detection mode in the HPD processing, the information processing apparatus 1 makes the transition to the sleep mode without waiting for the certain period of time (for example, 30 seconds).

Thus, when the transition of the operating state of the system to the standby state is made with a trigger other than that of detecting the leave of the person by the HPD processing, since the information processing apparatus 1 will end the motion detection mode if it is during the motion detection mode to make the transition to the sleep mode, it is possible to prevent unnecessary bootup by the HPD processing. Therefore, the information processing apparatus 1 can control the HPD processing properly.

Further, when the preset time has elapsed with no input (HID input) by the user, or when there is input by the user to make the transition to the standby state (the operation of the power button, the sleep command operation, or the like), the information processing apparatus 1 controls the operating state of the system from the normal operating state to the standby state based on the processing trigger other than the HPD processing.

Thus, the information processing apparatus 1 can cause the operating state of the system to make the transition to the standby state even in the processing other than the HPD processing, and can control the HPD processing properly even in that case.

Further, in the case where the operating state of the system is controlled from the standby state to the normal operating state, when the detection time (the setting time of the motion detection timer) in the motion detection mode is changed to 0 in the HPD processing, the information processing apparatus 1 returns the detection time to the certain period of time (for example, 30 seconds) mentioned above.

Thus, when the transition to the standby state is made with a trigger other than that of detecting the leave of the person by the HPD processing, the information processing apparatus 1 can change control to make the transition to the sleep mode without making the transition to the motion detection mode even if the leave of the person is detected after that so as not to affect subsequent control.

Further, when there is input by the user to make the transition to the normal operating state, the information processing apparatus 1 controls the operating state of the system from the standby state to the normal operating state by the second operation control processing (operation control processing by processing other than the HPD processing) .

Thus, the information processing apparatus 1 can boot up the system from the standby state even by processing other than the HPD processing, and can control the HPD processing properly even in that case.

Further, in the HPD processing, the information processing apparatus 1 makes the transition from the sleep mode to the presence detection mode due to the fact that a person is determined to be present within the detection range FoV in the sleep mode. Further, when the transition from the sleep mode to the presence detection mode is made by the HPD processing, the information processing apparatus 1 controls the operating state of the system from the standby state to the normal operating state by the first operation control processing (operation control processing by the HPD processing).

Thus, the information processing apparatus 1 can boot up the system from the standby state due to the fact that the approach of a person is detected by the HPD processing.

Further, in the HPD processing, when determining that a person is present within the detection range FoV in the sleep mode, the information processing apparatus 1 makes the transition from the sleep mode to the presence detection mode (attention wake mode) based further on the orientation of a face of the person.

Thus, when detecting by the HPD processing that a person with a face facing forward (paying attention to the information processing apparatus 1) has approached, the information processing apparatus 1 can boot up the system from the standby state.

Note that the standby state is a state in which at least the screen of the display unit 110 is turned off (screen off).

Thus, the information processing apparatus 1 can not only reduce power consumption in the standby state but also make the display contents of the screen invisible to others when the user is absent.

Further, a control method for the information processing apparatus 1 according to the present embodiment includes: a detection step in which, in the presence detection mode (the example of the first detection mode), an object present within the detection range FoV is detected using the ToF sensor 130, the presence or absence of a person within the detection range FoV is determined based on the detection result, and the transition to the motion detection mode (the example of the second detection mode) is made when it is determined that the person becomes absent within the detection range FoV; a detection step in which the motion detection mode is returned to the presence detection mode when the motion of an object is detected within the detection range FoV during the certain period of time (for example, 30 seconds) in the motion detection mode using the ToF sensor 130, or the transition to the sleep mode (the example of the third detection mode) is made when the motion of an object is not detected within the detection range FoV during the certain period of time; a detection step in which an object present within the detection range FoV is detected in the sleep mode with power consumption lower than the presence detection mode and the motion detection mode; a first operation control step to continue the normal operating state (the example of the first operating state) when the motion detection mode is returned to the presence detection mode during the certain period of time even after the transition from the presence detection mode to the motion detection mode is made in the detection steps mentioned above in a state where processing is controlled to first operation control processing (operation control processing by the HPD processing), or to control the operating state of the system to the standby state (the example of the second operating state) when the transition to the sleep mode is made in the detection steps mentioned above; and a second operation control step to control the operating state of the system to the normal operating state or the standby state based on a processing trigger other than that in the detection steps mentioned above. Then, in the control method for the information processing apparatus 1, when the operating state of the system is controlled from the normal operating state to the standby state by the second operation control step mentioned above though it is determined in the detection steps mentioned above that a person is present within the detection range FoV in the presence detection mode, a detection time (the setting time of the motion detection timer) in the motion detection mode is changed from the certain period of time (for example, 30 seconds) to 0, and the transition to the sleep mode is made without waiting for the certain period of time when it is determined that the person becomes absent within the detection range FoV in the presence detection mode.

Thus, in the control method for the information processing apparatus 1, when the transition of the operating state of the system to the standby state is made with a trigger other than that of detecting the leave of a person by the HPD processing, since the transition to the sleep mode is made without making the transition to the motion detection mode even when the leave of the person is detected after that, unnecessary bootup by the HPD processing can be prevented. Therefore, the control method for the information processing apparatus 1 can control the HPD processing properly.

While the embodiment of this invention has been described in detail above with reference to the accompanying drawings, the specific configurations are not limited to those described above, and design changes and the like are included without departing from the scope of this invention. For example, the respective components described in the embodiment mentioned above can be combined arbitrarily.

Further, in the aforementioned embodiment, the configuration example in which the ToF sensor 130 is built in the information processing apparatus 1, but the present invention is not limited to this example. For example, the ToF sensor 130 does not have to be built in the information processing apparatus 1, which may also be attachable to the information processing apparatus 1 (for example, onto any one of the side faces 10a, 10b, 10c, and the like) and communicably connected to the information processing apparatus 1 wirelessly or by wire as an external accessory of the information processing apparatus 1.

Further, in the aforementioned embodiment, the ToF sensor 130 using infrared light is described as an example of the distance measuring sensor, but the present invention is not limited to this example. For example, a distance measuring sensor using laser or ultrasonic waves may also be used. Further, the detection of the presence or absence of a person within the detection range FoV and the face orientation determination of the person may be performed using a camera (imaging unit) instead of the ToF sensor 130. In this case, the camera (imaging unit) may be built in the information processing apparatus 1, or may be attachable to the information processing apparatus 1 (for example, onto any one of the side faces 10a, 10b, 10c, and the like) and communicably connected to the information processing apparatus 1 wirelessly or by wire as an external accessory of the information processing apparatus 1.

Note that a screen lock state may also be included as the standby state. The screen lock is a state in which an image preset to make a content being processed invisible (for example, an image for the screen lock) is displayed on the display unit, that is, an unusable state until the lock is released (for example, until the user is authenticated).

Note that the information processing apparatus 1 described above has a computer system therein. Then, a program for implementing the function of each component included in the information processing apparatus 1 described above may be recorded on a computer-readable recording medium so that the program recorded on this recording medium is read into the computer system and executed to perform processing in each component included in the information processing apparatus 1 described above. Here, the fact that "the program recorded on the recording medium is read into the computer system and executed" includes installing the program on the computer system. It is assumed that the "computer system" here includes the OS and hardware such as peripheral devices and the like. Further, the "computer system" may also include two or more computers connected through networks including the Internet, WAN, LAN, and a communication line such as a dedicated line. Further, the "computer-readable recording medium" means a portable medium such as a flexible disk, a magneto-optical disk, a flash ROM, or a CD-ROM, or a storage device such as a hard disk built in the computer system. Thus, the recording medium with the program stored thereon may be a non-transitory recording medium such as the CD-ROM.

Further, a recording medium internally or externally provided to be accessible from a delivery server for delivering the program is included as the recording medium. Note that the program may be split into plural pieces, downloaded at different timings, respectively, and then united in each component included in the information processing apparatus 1, or delivery servers for delivering respective split pieces of the program may be different from one another. Further, it is assumed that the "computer-readable recording medium" includes a medium on which the program is held for a given length of time, such as a volatile memory (RAM) inside a computer system as a server or a client when the program is transmitted through a network. The above-mentioned program may also be to implement some of the functions described above. Further, the program may be a so-called a differential file (differential program) capable of implementing the above-described functions in combination with a program(s) already recorded in the computer system.

Further, some or all of the functions of the information processing apparatus 1 in the embodiment described above may be realized as an integrated circuit such as LSI (Large Scale Integration). Each function may be implemented by a processor individually, or some or all of the functions may be integrated as a processor. Further, the method of circuit integration is not limited to LSI, and it may be realized by a dedicated circuit or a general-purpose processor. Further, if integrated circuit technology replacing the LSI appears with the progress of semiconductor technology, an integrated circuit according to the technology may be used.

Further, the information processing apparatus 1 of the aforementioned embodiment is not limited to the laptop PC, which may also be, for example, a desktop PC, a tablet terminal device, a smartphone, a gaming device, a multimedia terminal, or the like.

### Description of Symbols

- 1: information processing apparatus
- 10: first chassis
- 20: second chassis
- 15: hinge mechanism
- 110: display unit
- 130: ToF sensor
- 140: power button
- 150: input device
- 151: keyboard
- 153: touch pad
- 160: communication unit
- 170: storage unit
- 200: EC
- 210: detection processing unit
- 211: person detection unit
- 212: motion detection timer
- 213: detection result output unit
- 300: main processing unit
- 301: CPU
- 302: GPU
- 303: chipset
- 304: system memory
- 310: system processing unit
- 311: operation control unit
- 312: screen off timer
- 400: power supply unit

## Claims

1. An information processing apparatus comprising:
a sensor for detecting an object present within a predetermined detection range; and
a processor which controls an operating state of a system to a first operating state or a second operating state with power consumption lower than the first operating state,
wherein the processor performs
detection processing having a first detection mode to detect an object present within the detection range using the sensor, to determine presence or absence of a person within the detection range based on the detection result, and to make a transition to a second detection mode when it is determined that the person becomes absent within the detection range, the second detection mode to return to the first detection mode when motion of an object is detected within the detection range during a certain period of time using the sensor, or to make a transition to a third detection mode when the motion of an object is not detected within the detection range during the certain period of time, and the third detection mode to detect an object present within the detection range with power consumption lower than the first detection mode and the second detection mode,
first operation control processing to continue the first operating state when returning to the first detection mode during the certain period of time even after making the transition from the first detection mode to the second detection mode in the detection processing in a state where the operating state of the system is controlled to the first operating state, or to control the operating state of the system to the second operating state when making the transition to the third detection mode in the detection processing, and
second operation control processing to control the operating state of the system to the first operating state or the second operating state based on a processing trigger other than the detection processing, and
when the operating state of the system is controlled from the first operating state to the second operating state by the second operation control processing though it is determined in the detection processing that a person is present within the detection range in the first detection mode, the processor changes a detection time in the second detection mode from the certain period of time to 0, and makes the transition to the third detection mode without waiting for the certain period of time when determining that the person becomes absent within the detection range in the first detection mode.

2. The information processing apparatus according to claim 1, wherein the processor makes the transition to the third detection mode without waiting for the certain period of time during the second detection mode in the detection processing when the operating state of the system is controlled from the first operating state to the second operating state by the second operation control processing.

3. The information processing apparatus according to claim 1 or 2, wherein the processor controls the operating state of the system from the first operating state to the second operating state by the second operation control processing when a preset period of time has elapsed with no input by a user or when there is input by the user to make the transition to second operating state.

4. The information processing apparatus according to any preceding claim, wherein when the operating state of the system is controlled from the second operating state to the first operating state in such a state that the detection time in the second detection mode is changed to 0 in the detection processing, the processor returns the detection time to the certain period of time.

5. The information processing apparatus according to claim 4, wherein when there is input by the user to make the transition to the first operating state, the processor controls the operating state of the system from the second operating state to the first operating state by the second operation control processing.

6. The information processing apparatus according to claim 4, wherein
the processor makes the transition from the third detection mode to the first detection mode in the detection processing due to a fact that a person is determined to be present within the detection range in the third detection mode, and
when making the transition from the third detection mode to the first detection mode by the detection processing, the processor controls the operating state of the system from the second operating state to the first operating state.

7. The information processing apparatus according to claim 6, wherein in the detection processing, when the person is determined to be present within the detection range in the third detection mode, the processor makes the transition from the third detection mode to the first detection mode based on an orientation of a face of the person.

8. The information processing apparatus according to any preceding claim, wherein the second operating state is a state in which at least a screen of a display unit is turned off.

9. A control method for an information processing apparatus including: a sensor for detecting an object present within a predetermined detection range; and a processor which controls an operating state of a system to a first operating state or a second operating state with power consumption lower than the first operating state, the control method causing the processor to perform:
a detection step having a first detection mode to detect an object present within the detection range using the sensor, to determine presence or absence of a person within the detection range based on the detection result, and to make a transition to a second detection mode when determining that the person becomes absent within the detection range, the second detection mode to return to the first detection mode when motion of an object is detected within the detection range during a certain period of time using the sensor, or make a transition to a third detection mode when the motion of an object is not detected within the detection range during the certain period of time, and the third detection mode to detect an object present within the detection range with power consumption lower than the first detection mode and the second detection mode;
a first operation control step to continue the first operating state when returning to the first detection mode during the certain period of time even after making the transition from the first detection mode to the second detection mode in the detection step in a state where the operating state of the system is controlled to the first operating state, or to control the operating state of the system to the second operating state when making the transition to the third detection mode in the detection step; and
a second operation control step to control the operating state of the system to the first operating state or the second operating state based on a processing trigger other than that in the detection step,
wherein when the operating state of the system is controlled from the first operating state to the second operating state by the second operation step though it is determined in the detection step that a person is present within the detection range in the first detection mode, a detection time in the second detection mode is changed from the certain period of time to 0, and the transition to the third detection mode is made without waiting for the certain period of time when it is determined that the person becomes absent within the detection range in the first detection mode.

10. The information processing apparatus according to claim 9, wherein the processor makes the transition to the third detection mode without waiting for the certain period of time during the second detection mode in the detection processing when the operating state of the system is controlled from the first operating state to the second operating state by the second operation control processing.

11. The control method according to claim 9 or 10, further comprising the processor being caused to: control the operating state of the system from the first operating state to the second operating state by the second operation control processing when a preset period of time has elapsed with no input by a user or when there is input by the user to make the transition to second operating state.

12. The control method according to any of claims 9 to 11, wherein when the operating state of the system is controlled from the second operating state to the first operating state in such a state that the detection time in the second detection mode is changed to 0 in the detection processing, the processor is further caused to return the detection time to the certain period of time.

13. The control method according to claim 12, wherein when there is input by the user to make the transition to the first operating state, the processor is further caused to: control the operating state of the system from the second operating state to the first operating state by the second operation control processing.

14. The control method according to claim 12, wherein
the processor is further caused to: make the transition from the third detection mode to the first detection mode in the detection processing due to a fact that a person is determined to be present within the detection range in the third detection mode, and
when making the transition from the third detection mode to the first detection mode by the detection processing, the processor is further caused to control the operating state of the system from the second operating state to the first operating state.

15. The control method according to claim 14, wherein in the detection processing, when the person is determined to be present within the detection range in the third detection mode, the processor is further caused to make the transition from the third detection mode to the first detection mode based on an orientation of a face of the person.
